# EUROPÄISCHE PATENTSCHRIFT

(11) **EP 3 838 802 B1**
(45) Veröffentlichungstag und Bekanntmachung des Hinweises auf die Patenterteilung: **03.07.2024**
(21) Anmeldenummer: 19218183.2
(22) Anmeldetag: 19.12.2019
(51) Int. Cl.: B65G 1/04, B65G 57/30, B65G 60/00

(54) **STAPELLAGERANORDNUNG UND VERFAHREN ZUM BETREIBEN EINER STAPELLAGERANORDNUNG**
STORAGE SYSTEM FOR PILED CONTAINERS AND METHOD FOR OPERATING SAME
SYSTÈME DE STOCKAGE PAR EMPILEMENT ET PROCÉDÉ DE FONCTIONNEMENT D'UN SYSTÈME DE STOCKAGE PAR EMPILEMENT

(43) Veröffentlichungstag der Anmeldung: 23.06.2021
(73) Patentinhaber: Jungheinrich Aktiengesellschaft, 22047 Hamburg (DE)
(72) Erfinder: Becker, Michael, 63512 Hainburg (DE); Cavelius, Jörg, 61118 Bad Vilbel (DE); Liebhaber, Markus, 61440 Oberursel (DE)
(74) Vertreter: Keil & Schaafhausen Patentanwälte PartGmbB

(56) Entgegenhaltungen:
- DE-C2- 19 849 391
- JP-A- S59 108 618
- NL-A- 9 300 418

## Beschreibung

Die vorliegende Erfindung betrifft eine Stapellageranordnung nach dem Oberbegriff des Anspruchs 1.

Ferner betrifft die Erfindung ein Verfahren zum Betreiben einer Stapellageranordnung nach dem Oberbegriff des Anspruchs 11.

Eine derartige Stapellageranordnung und ein derartiges Verfahren sind beispielsweise aus JP S59-108618 A bekannt. Das Dokument JP S59-108618 A offenbart eine Stapellageranordnung mit mehreren Behälteraufnahmeräumen, einem unterhalb der Behälteraufnahmeräume angeordneten Beschickungsraum und einem in dem Beschickungsraum verfahrbaren Beschickungsfahrzeug, das ein Fahrgestell und eine gegenüber dem Fahrgestell höhenveränderbare Behälteraufnahme aufweist, wobei zwischen jeweils einem Behälteraufnahmeraum und dem Beschickungsraum eine Halteeinrichtung angeordnet ist, wobei die Halteeinrichtung mehrere Halteelemente aufweist, wobei die Halteelemente zwischen einer Halteposition und einer Freigabeposition bewegbar sind, wobei eine Offenhalteeinrichtung getrennt von der Behälteraufnahme am Fahrgestell angeordnet ist, wobei die Offenhalteeinrichtung eine Anzahl von Offenhalteelemente aufweist, die mindestens der Anzahl der Halteelemente entspricht, wobei die Halteeinrichtung mehrere Stößel aufweist, wobei jedem Halteelement ein Stößel zugeordnet ist, das zwischen einer ersten Stellung, in der es das Halteelement in der Freigabeposition hält, und einer zweiten Stellung, in der es nicht auf das Halteelement wirkt, bewegbar ist, wobei der Stößel durch die Offenhalteeinrichtung betätigbar ist. Hier können Spritzgussteile in einem Container abgelegt werden, der dann mit Hilfe eines Beschickungswagens in einen Beschickungsraum gefahren wird. Im Beschickungsraum wird der Container angehoben, bis er eine Halteeinrichtung passiert. Die Halteeinrichtung wird durch eine Offenhalteeinrichtung geöffnet. Die Offenhalteeinrichtung weist einen Stößel auf, der von einem am Beschickungswagen angeordneten Stößel betätigt werden kann. Dieser Stößel wiederum wird durch einen am Beschickungswagen angeordneten Elektromagneten bewegt.

NL 9300418 zeigt eine Positioniervorrichtung für Pflanzen. Die Pflanzen werden in Containern angeordnet. Die Container werden in Reihen und Spalten in einem Gewächshaus angeordnet. Hierzu sind an den Ecken der jeweiligen Lagerplätze der Container Ständer vorgesehen. Jeder Ständer weist an seinem oberen Ende Halter auf, die als zweiarmige Hebel ausgebildet sind, die um eine Achse schwenkbar sind. Ein Arm dient dabei zum Halten des Containers. Der andere Arm ist mit einer Stange verbunden, die an ihrem unteren Ende ein Fenster aufweist. In das Fenster kann eine Klinke einfahren, die an einem Beschickungsfahrzeug angeordnet ist und die Stange nach unten bewegt.

Eine weitere Stapellageranordnung und ein weiteres Verfahren sind beispielsweise aus DE 198 49 391 C2 bekannt.

Zum Einlagern eines Behälters in einen Behälteraufnahmeraum wird das Beschickungsfahrzeug unter einen Behälteraufnahmeraum verfahren und hebt dann den Behälter an, bis er mit dem bis dahin untersten Behälter des Stapels in Kontakt kommt. Beim weiteren Anheben öffnet der Behälter die Halteeinrichtung. Wenn der Behälter ausreichend weit an der Halteeinrichtung vorbeigeführt worden ist, wird der Behälter mit dem eventuell darauf befindlichen Stapel wieder abgesenkt, so dass die Halteeinrichtung unter dem Behälter einrasten kann. Beim Entnehmen eines Behälters wird der Behälter, ggfs. mit einem auf ihm befindlichen Stapel von weiteren Behältern, erneut angehoben. Dabei gelangt eine an der Behälteraufnahme angeordnete Öffnungseinrichtung in Eingriff mit der Halteeinrichtung und öffnet diese. Wenn der Behälter abgesenkt wird, hält die Öffnungseinrichtung die Halteeinrichtung so lange offen, bis der Behälter vorbeigeführt worden ist und rastet dann unter dem folgenden Behälter ein.

Wenn man einen Behälter aus der Stapellageranordnung entnehmen möchte, der Behälter aber nicht der unterste Behälter eines Stapels ist, muss man zunächst die unter dem gewünschten Behälter befindlichen Behälter umstapeln, also die Behälter entnehmen und in einem anderen Behälteraufnahmeraum unterbringen. Dies erfordert Zeit und Energie.

Der Erfindung liegt die Aufgabe zugrunde, eine Stapellageranordnung wirtschaftlich zu betreiben.

Diese Aufgabe wird bei einer Stapellageranordnung mit den Merkmalen des Anspruchs 1 gelöst.

Mit der Offenhalteeinrichtung kann man die Stapellageranordnung so betreiben, dass sich die Halteeinrichtung nicht automatisch wieder schließt, wenn der auf der Behälteraufnahme aufstehende Behälter nach unten aus dem Behälteraufnahmeraum entnommen wird. Man kann vielmehr die Halteeinrichtung mit der Offenhalteeinrichtung offenhalten und dann beispielsweise zwei oder mehr Behälter in einer einzigen Bewegung aus dem Behälteraufnahmeraum entnehmen. Dadurch können Umstapelvorgänge in einer kürzeren Zeit und mit wenigen Verfahrbewegungen des Beschickungsfahrzeugs vorgenommen werden. Die Halteeinrichtung weist ein Fixierelement auf, das zwischen einer ersten Stellung, in der es das Halteelement in einer geöffneten Stellung hält, und einer zweiten Stellung, in der es nicht auf das Halteelement wirkt, bewegbar ist, wobei das Fixierelement durch die Offenhalteeinrichtung betätigbar ist. Man kann die Halteeinrichtung beispielsweise durch eine Bewegung der Behälteraufnahme öffnen und dann lediglich vorsehen, dass die Offenhalteeinrichtung das jeweilige Halteelement mit Hilfe des Fixierelements in der geöffneten Position hält. Damit kann die Offenhalteeinrichtung relativ klein bauen und kann mit relativ geringen Kräften betrieben werden.

Die Halteeinrichtung weist mehrere Halteelemente auf, wobei die Offenhalteeinrichtung eine Anzahl von Offenhalteelementen aufweist, die mindestens der Anzahl der Halteelemente entspricht. Man kann also eine Zuordnung so vornehmen, dass jedes Halteelement von einem Offenhalteelement beaufschlagt und damit in einer geöffneten Stellung gehalten werden kann.

Vorzugsweise weist die Offenhalteeinrichtung eine am Fahrgestell angeordnete Antriebsanordnung auf. Auch die Antriebsanordnung ist dann nicht an der Behälteraufnahme angeordnet und wird nicht mit der Behälteraufnahme bewegt, sondern befindet sich am Fahrgestell, also ortsfest in Bezug auf die Offenhalteeinrichtung.

Bevorzugterweise ist eine Kraftbegrenzungseinrichtung zwischen der Antriebseinrichtung und der Offenhalteeinrichtung angeordnet. Damit kann man gewisse Ungenauigkeiten und Toleranzen in Kauf nehmen. Die Offenhalteeinrichtung kann nur mit einer durch die Kraftbegrenzungseinrichtung begrenzten Kraft auf die Halteeinrichtung wirken, so dass beispielsweise Unebenheiten in der Fahrfläche, auf der das Beschickungsfahrzeug verfahren wird, keine Rolle mehr spielen. Auch wenn die Antriebsanordnung immer mit dem gleichen Hub arbeitet und somit auf die Offenhalteeinrichtung wirkt, wird eine Beschädigung der Halteeinrichtung durch eine zu große Bewegung der Offenhalteeinrichtung vermieden.

Vorzugsweise weist die Antriebsanordnung ein unter einer Vorspannung stehendes Antriebselement und einen Motor auf, der entgegen der Vorspannung auf das Antriebselement wirkt. Die Vorspannung kann das Antriebselement beispielsweise in eine Richtung beaufschlagen, in der die Offenhalteeinrichtung auf die Halteeinrichtung wirkt.

Vorzugsweise ist der Motor als Rotationsmotor ausgebildet. Ein Rotationsmotor, der beispielsweise als Schrittmotor oder dergleichen ausgebildet sein kann, lässt sich leicht steuern.

Vorzugsweise ist die Offenhalteeinrichtung außerhalb einer Öffnung angeordnet, die den Behälteraufnahmeraum mit dem Beschickungsraum verbindet. Die Offenhalteeinrichtung ist also außerhalb einer Bewegungsbahn angeordnet, durch die ein Behälter vom Behälteraufnahmeraum in den Beschickungsraum oder umgekehrt bewegt wird und stört damit eine Bewegung des Behälters nicht.

Vorzugsweise ist das Fixierelement verschwenkbar gelagert. Das Fixierelement kann beispielsweise als Hebel ausgebildet sein, der um eine Achse verschwenkt werden kann.

Bevorzugterweise ist das Fixierelement in die zweite Stellung vorgespannt. Damit wird sichergestellt, dass ein versehentliches Offenhalten der Halteeinrichtung nicht auftreten kann. Wenn eine Antriebsenergie fehlt, wird die Halteeinrichtung automatisch in einen Zustand versetzt, in der sie einen Behälter oder einen Behälterstapel halten kann.

Eine Entriegelungseinrichtung zum Lösen der Halteeinrichtung ist am Beschickungsfahrzeug angeordnet. Die Entriegelungseinrichtung ist erfindungsgemäß an der höhenveränderbaren Behälteraufnahme angeordnet und öffnet die Halteeinrichtung beim Anheben eines Behälters.

Die Aufgabe wird durch ein Verfahren nach Anspruch 9 gelöst.

Man ist also nicht mehr darauf angewiesen, dass die Behälteraufnahme die Halteeinrichtung offenhält, wenn man den Behälter aus dem Behälteraufnahmeraum entnehmen will. Vielmehr wird hierfür die Offenhalteeinrichtung verwendet, so dass man auch mehrere Behälter gleichzeitig aus dem Behälteraufnahmeraum entnehmen kann.

Vorzugsweise öffnet man die Halteeinrichtung durch das Anheben der Behälteraufnahme. Man kann dann bekannte Elemente für das Öffnen oder Lösen der Halteeinrichtung verwenden. Lediglich das Offenhalten wird dann als Zusatzfunktion verwendet.

Auch ist bevorzugt, dass man mehrere Behälter gleichzeitig aus einem Behälteraufnahmeraum entnimmt. Damit lässt sich ein Umstapelvorgang in kurzer Zeit bewerkstelligen.

Die Erfindung wird im Folgenden anhand eines bevorzugten Ausführungsbeispiels in Verbindung mit der Zeichnung beschrieben. Hierin zeigen:
- Fig. 1: eine schematische Darstellung einer Stapellageranordnung,
- Fig. 2: eine perspektivische Darstellung eines Beschickungsfahrzeugs,
- Fig. 3: Teile einer Offenhalteeinrichtung,
- Fig. 4: eine schematische Darstellung der Halteeinrichtung in geschlossener Stellung,
- Fig. 5: eine vergrößerte Einzelheit von Fig. 4,
- Fig. 6: die Halteeinrichtung von Fig. 4 in geöffneter Stellung, und
- Fig. 7: eine vergrößerte Darstellung einer Einzelheit aus Fig. 6.

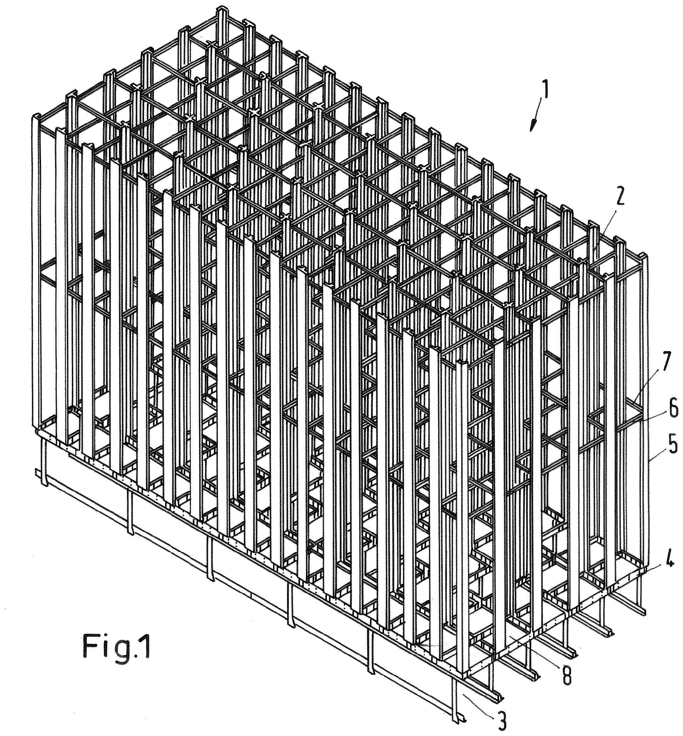

Fig. 1 zeigt schematisch eine Stapellageranordnung mit mehreren Behälteraufnahmeräumen 2 und einem Beschickungsraum 3, der unterhalb der Behälteraufnahmeräume 2 angeordnet ist.

Zwischen den Behälteraufnahmeräumen 2 und dem Beschickungsraum 3 ist eine Rahmenanordnung 4 angeordnet. Auf der Rahmenanordnung 4 sind Ständer 5 angeordnet, die durch Querstreben 6 und Längsstreben 7 miteinander verbunden sind.

Die Rahmenanordnung 4 weist für jeden Behälteraufnahmeraum 2 eine Öffnung 8 auf, durch die der Behälteraufnahmeraum 2 mit dem Beschickungsraum 3 in Verbindung steht.

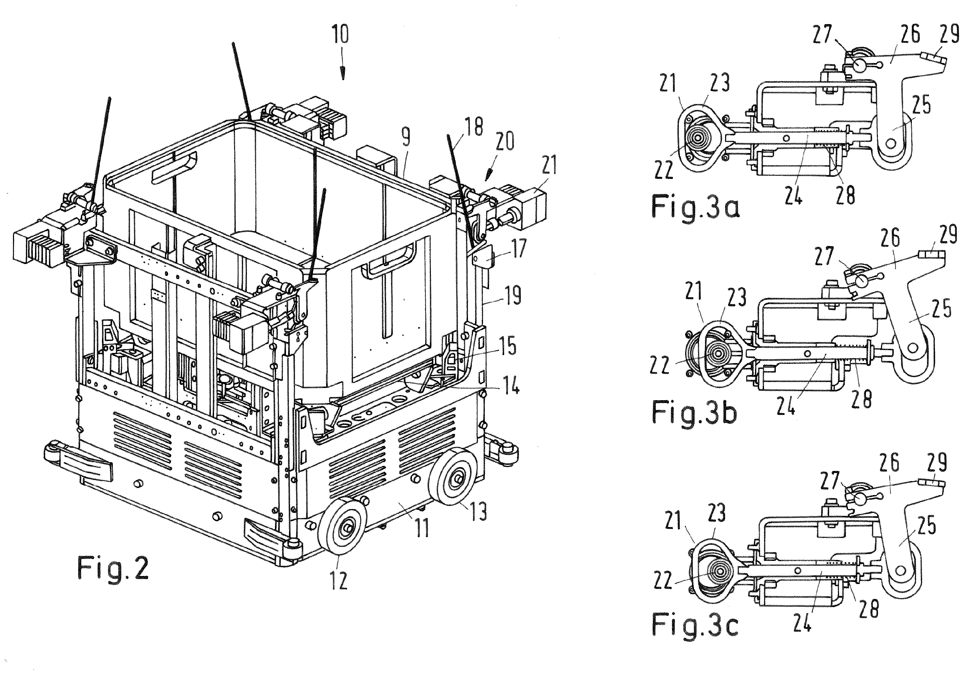

Um Behälter 9 in einem Behälteraufnahmeraum 2 einzulagern oder einen Behälter aus einem Behälteraufnahmeraum 2 zu entnehmen, ist ein in Fig. 2 dargestelltes Beschickungsfahrzeug 10 vorgesehen. Das Beschickungsfahrzeug 10 kann in den Beschickungsraum 3 eingefahren und dort bewegt werden.

Das Beschickungsfahrzeug weist ein Fahrgestell 11 mit Rädern 12, 13 auf. Weiterhin weist das Beschickungsfahrzeug 10 eine Behälteraufnahme 14 auf, die in nicht näher dargestellter Weise höhenveränderbar ist, so dass ein auf der Behälteraufnahme 14 angeordneter Behälter 9 angehoben und abgesenkt werden kann.

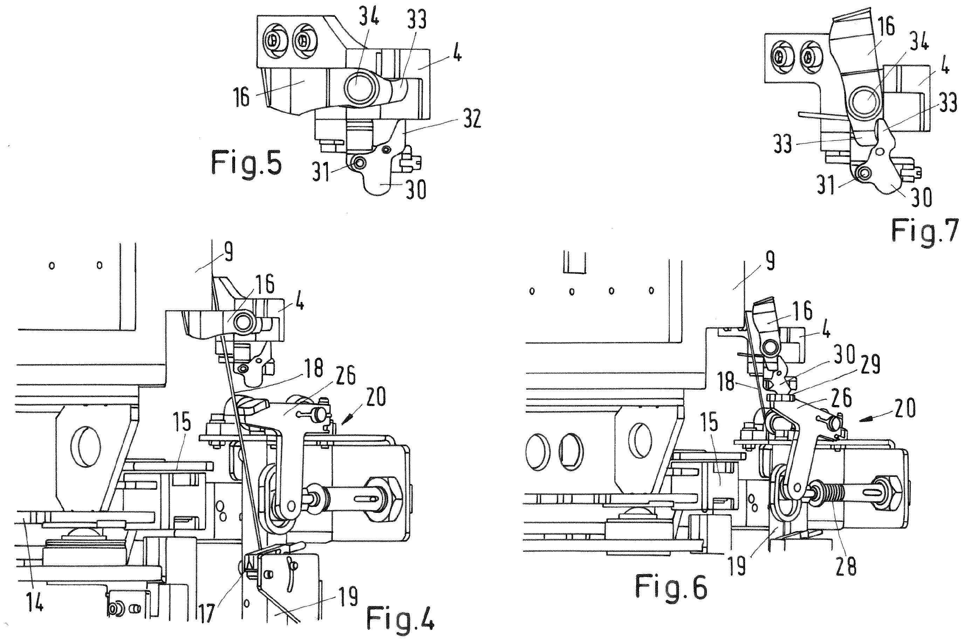

An der Behälteraufnahme 14 sind Entriegelungselemente 15 einer Entriegelungseinrichtung angeordnet. Die Entriegelungselemente 15 werden gemeinsam mit der Behälteraufnahme 14 angehoben, um eine Halteeinrichtung, von der jeweils ein Halteelement 16 in den Fig. 4 bis 7 dargestellt ist, von einer Halteposition (Fig. 4 und 5) in eine Freigabeposition (Fig. 6 und 7) zu bewegen. Die Halteelemente 16 sind an der Rahmenanordnung 4 befestigt, also am unteren Ende eines Behälteraufnahmeraums 2. Die Halteelemente 4 können damit entweder einen Behälter 9 in einem Behälteraufnahmeraum 2 festhalten (Fig. 4) oder sie machen es möglich, dass der Behälter 9 nach unten aus dem Behälteraufnahmeraum 2 entnommen werden kann (Fig. 6).

Im vorliegenden Ausführungsbeispiel bilden jeweils vier Halteelemente 16 eine Halteeinrichtung. Es ist aber auch möglich, die Halteeinrichtung mit nur zwei Halteelementen 16 auszubilden, die dann beispielsweise an diagonal gegenüberliegenden Ecken der Öffnung eines Behälteraufnahmeraums 2 angeordnet sind. Im vorliegenden Ausführungsbeispiel weist das Beschickungsfahrzeug 10 für jedes Halteelement 16 einen Sensor 17 auf, der beispielsweise mit Hilfe eines Lichtstrahls 18 feststellen kann, ob sich das Halteelement 16 in der in Fig. 4 dargestellten Verriegelungsposition oder in der in Fig. 6 dargestellten Freigabeposition befindet.

Die Sensoren 17 sind an Ständern 19 des Beschickungsfahrzeugs 10 befestigt. An den Ständern ist weiterhin eine Offenhalteeinrichtung 20 angeordnet. Jede Offenhalteeinrichtung 20 weist einen Motor 21 auf, beispielsweise einen Elektromotor, der als Rotationsmotor ausgebildet ist. Der Motor 21 treibt ein exzentrisch angeordnetes Antriebsrad 22 an (Fig. 3). Das Antriebsrad 22 ist im Inneren einer im Wesentlichen dreieckförmigen Kulisse 23 angeordnet. Wenn der Motor 21 betätigt wird, erzeugt das Antriebsrad 22 eine lineare Bewegung der Kulisse 23. Die Kulisse 23 ist mit einem Stößel 24 verbunden, dessen anderes Ende auf einen Antriebsabschnitt 25 eines Betätigungshebels 26 wirkt. Der Betätigungshebel 26 ist um eine Achse 27 verschwenkbar.

Der Stößel 24 ist durch eine Feder 28 belastet und zwar in eine Richtung vom Antriebsrad 22 weg, so dass der Motor 21 immer gegen die Kraft der Feder 28 arbeiten muss.

Wenn der Motor 21 also das Antriebsrad 22 in die in Fig. 3a dargestellte Position bewegt, dann zieht das Antriebsrad 22 den Stößel 24 und damit den Betätigungshebel 26 in eine "unbetätigte" Stellung. Wenn der Motor 21 das Antriebsrad 22 hingegen in die in Fig. 3b dargestellte Position bewegt hat, wird der Stößel 24 durch die Feder 28 in eine Position der maximalen Verschiebung verschoben und verschwenkt damit den Betätigungshebel 26 in eine Stellung, in der er "maximal betätigt" ist.

Wenn hingegen auf den Betätigungshebel 26, genauer gesagt auf eine Druckfläche 29 des Betätigungshebels 26, eine Kraft wirkt, die größer ist als eine Kraft, mit der die Feder 28 auf den Betätigungshebel 26 wirkt, dann wird der Betätigungshebel 26 in die in Fig. 3c dargestellte Position verschwenkt, in der er "minimal betätigt" ist. Die Feder 28 bildet also eine Kraftbegrenzungseinrichtung, so dass der Betätigungshebel 26 kraftgesteuert ist und auch dann keinen Schaden anrichten kann, wenn der Motor 21 das Antriebsrad 22 in eine Position der maximalen Auslenkung dreht.

Da der Betätigungshebel 26 direkt oder indirekt auf die Halteeinrichtung wirkt, wird damit zuverlässig eine Beschädigung der Halteeinrichtung vermieden.

Fig. 4 und 5 zeigen nun ein Halteelement 16 der Halteeinrichtung in geschlossener Stellung, also in einer Position, in der der Behälter 9 auf dem Halteelement 16 aufsteht. In dieser Position kann der Behälter nicht nach unten an dem Halteelement 16 vorbeitreten. Er wird also in dem Behälteraufnahmeraum 2 gehalten. Die Offenhalteeinrichtung 20 ist unbetätigt. Der Sensor 17 kann mit Hilfe des Lichtstrahls 18 die "geschlossene Position" des Halteelements 16 erfassen.

Wenn nun der Behälter 9 entnommen werden soll, dann wird die Behälteraufnahme 14 angehoben und das Entriegelungselement 15 kommt in Kontakt mit dem Halteelement 16 und verschwenkt es in die in Fig. 6 dargestellte Position, in der der Behälter 9 am Halteelement 16 vorbeigeführt werden kann. Wenn keine Entriegelungselemente 15 vorhanden sind, kann das Öffnen oder Entriegeln der Halteelemente 16 auch auf andere Weise erfolgen.

Aus den Fig. 5 und 7 ist zu erkennen, dass dem Halteelement 16 ein Fixierelement 30 zugeordnet ist, das als Hebel ausgebildet ist, der um eine Achse 31 verschwenkbar ist.

Wenn nun der Betätigungshebel 26 aus der in Fig. 4 dargestellten unbetätigten Stellung in die in Fig. 6 dargestellte betätigte Stellung verschwenkt wird, dann wirkt er mit seiner Anlagefläche 29 auf das Fixierelement 30 und verschwenkt es so, dass es mit einer Nase 32 auf einen Haltearm 33 des Halteelements 16 wirkt und damit das Halteelement 16, das um eine Schwenkachse 34 verschwenkbar ist, in der geöffneten oder entriegelten Position hält.

Die Offenhalteeinrichtung 20 und ein nicht näher dargestellter Hubantrieb der Behälteraufnahme 14 sind dabei mit einer gemeinsamen Steuereinrichtung verbunden. Die Steuereinrichtung betätigt die Offenhalteeinrichtung 20 erst dann, wenn die Hubeinrichtung 14 soweit angehoben worden ist, dass die Entriegelungseinrichtung mit den Entriegelungselementen 15 die Halteelemente 16 der Halteeinrichtung in die geöffnete oder gelöste Position verschwenkt haben.

Die Offenhalteeinrichtung 20 ist außerhalb der Öffnung 8 angeordnet, die den Behälteraufnahmeraum 2 mit dem Beschickungsraum 3 verbindet. Eine Bewegung des Behälters 9 vom Behälteraufnahmeraum 2 in den Beschickungsraum 3 oder umgekehrt, wird also durch die Offenhalteeinrichtung 20 nicht behindert.

Die Halteelemente 16 sind so ausgebildet, dass sie ohne Einwirkung der Offenhalteeinrichtung 20 wieder in ihre in Fig. 4 dargestellte Verriegelungsposition schwenken. Dies kann beispielsweise dadurch bewirkt werden, dass die Halteelemente 16 durch eine Rückstellfeder belastet sind. Man kann dies auch dadurch bewirken, dass die Halteelemente 16 eine Massenverteilung aufweisen, die so ausgebildet ist, dass sich der Massenschwerpunkt des Halteelements 16 immer auf einer Seite der Schwenkachse 34 befindet, in die das Halteelement 16 zurückbewegt werden soll. Sobald also die Offenhalteeinrichtung 20 deaktiviert ist, bewegt sich das Halteelement 16 automatisch in die in Fig. 4 dargestellte Halteposition.

Das Fixierelement 30 ist mit einer nicht näher dargestellten Feder in Richtung auf eine Stellung vorgespannt, in der es nicht mehr auf das Halteelement 16 wirkt. Die Feder gibt also ein Moment auf das Fixierelement 30, das bezogen auf die Darstellung der Fig. 5 und 7 im Uhrzeigersinn gerichtet ist.

Sobald also der Betätigungshebel 26 nicht mehr auf das Fixierelement 30 wirkt, schwenkt das Fixierelement 30 automatisch in die in Fig. 4 und 5 dargestellte Position zurück und das Halteelement kann dann ohne weiteres in die in Fig. 4 und 5 dargestellte Halteposition zurückschwenken.

## Patentansprüche

1. Stapellageranordnung (1) mit mehreren Behälteraufnahmeräumen (2), einem unterhalb der Behälteraufnahmeräume (2) angeordneten Beschickungsraum (3) und einem in dem Beschickungsraum (3) verfahrbaren Beschickungsfahrzeug (10), das ein Fahrgestell (11) und eine gegenüber dem Fahrgestell (11) höhenveränderbare Behälteraufnahme (14) aufweist,
wobei zwischen jeweils einem Behälteraufnahmeraum (2) und dem Beschickungsraum (3) eine Halteeinrichtung angeordnet ist,
wobei die Halteeinrichtung mehrere Halteelemente (16) aufweist,
wobei die Halteelemente zwischen einer Halteposition und einer Freigabeposition bewegbar sind,
wobei an der Behälteraufnahme (14) Entriegelungselemente (15) einer Entriegelungseinrichtung angeordnet sind,
wobei die Entriegelungselemente (15) mit der Behälteraufnahme (14) angehoben werden können, um die Halteelemente (16) von der Halteposition in die Freigabeposition zu bewegen,
wobei eine Offenhalteeinrichtung (20) getrennt von der Behälteraufnahme (14) am Fahrgestell (11) angeordnet ist, wobei die Offenhalteeinrichtung (20) eine Anzahl von Offenhalteelemente (26) aufweist, die mindestens der Anzahl der Halteelemente (16) entspricht,
wobei die Halteeinrichtung mehrere Fixierelemente (30) aufweist,
wobei jedem Halteelement (16) ein Fixierelement (30) zugeordnet ist, das zwischen einer ersten Stellung, in der es das Halteelement (16) in der Freigabeposition hält, und einer zweiten Stellung, in der es nicht auf das Halteelement (16) wirkt, bewegbar ist,
wobei das Fixierelement (30) durch die Offenhalteeinrichtung (20) betätigbar ist.

2. Stapellageranordnung nach Anspruch 1, **dadurch gekennzeichnet, dass** die Offenhalteeinrichtung (20) eine am Fahrgestell (11) angeordnete Antriebsanordnung (21, 22, 24) aufweist.

3. Stapellageranordnung nach Anspruch 2, **dadurch gekennzeichnet, dass** eine Kraftbegrenzungseinrichtung (28) zwischen der Antriebsanordnung (21) und einem Betätigungshebel (26) der Offenhalteeinrichtung (20) angeordnet ist.

4. Stapellageranordnung nach Anspruch 2 oder 3, **dadurch gekennzeichnet, dass** die Antriebsanordnung (21, 22) ein unter einer Vorspannung stehendes Antriebselement (24) und einen Motor (21) aufweist, der entgegen der Vorspannung auf das Antriebselement (24) wirkt.

5. Stapellageranordnung nach Anspruch 4, **dadurch gekennzeichnet, dass** der Motor (21) als Rotationsmotor ausgebildet ist.

6. Stapellageranordnung nach einem der Ansprüche 1 bis 5, **dadurch gekennzeichnet, dass** die Offenhalteeinrichtung (20) außerhalb einer Öffnung (8) angeordnet ist, die den Behälteraufnahmeraum (2) mit dem Beschickungsraum (3) verbindet.

7. Stapellageranordnung nach einem der Ansprüche 1 bis 6, **dadurch gekennzeichnet, dass** Fixierelement (30) verschwenkbar gelagert ist.

8. Stapellageranordnung nach einem der Ansprüche 1 bis 7, **dadurch gekennzeichnet, dass** das Fixierelement (30) in die zweite Stellung vorgespannt ist.

9. Verfahren zum Betreiben einer Stapellageranordnung (1) nach einem der Ansprüche 1 bis 8, wobei man die Halteelemente (16) der Halteeinrichtung unter Verwendung der Offenhalteeinrichtung (20) in der Freigabeposition hält.

10. Verfahren nach Anspruch 9, **dadurch gekennzeichnet, dass** man die Halteeinrichtung durch das Anheben der Behälteraufnahme (14) öffnet.

11. Verfahren nach Anspruch 9 oder 10, **dadurch gekennzeichnet, dass** man mehrere Behälter (9) gleichzeitig aus einem Behälteraufnahmeraum (2) entnimmt.

## Claims

1. Stacking storage arrangement (1) having a plurality of container receiving spaces (2), a loading space (3) arranged below the container receiving spaces (2) and a charging vehicle (10) which can be moved in the loading space (3) and has a chassis (11) and a container holder (14) which can be adjusted in height relative to the chassis (11),
wherein a holding device is arranged between a respective container receiving space (2) and the loading space (3),
wherein the holding device has a plurality of holding elements (16),
wherein the holding elements are movable between a holding position and a release position,
wherein unlocking elements (15) of an unlocking device are arranged on the container holder (14),
wherein the unlocking elements (15) can be lifted with the container holder (14) in order to move the holding elements (16) from the holding position into the release position,
wherein a holding-open device (20) is arranged separately from the container holder (14) on the chassis (11), wherein the holding-open device (20) has a number of holding-open elements (26) which corresponds at least to the number of holding elements (16),
wherein the holding device has a plurality of fixing elements (30),
wherein each holding element (16) is assigned a fixing element (30) which can be moved between a first position, in which it holds the holding element (16) in the release position, and a second position, in which it does not act on the holding element (16),
wherein the fixing element (30) is actuable by the open-holding device (20).

2. Stacking storage arrangement according to claim 1, **characterized in that** the holding-open device (20) has a drive arrangement (21, 22, 24) arranged on the chassis (11).

3. Stacking storage arrangement according to claim 2, **characterized in that** a force-limiting device (28) is arranged between the drive arrangement (21) and an actuating lever (26) of the hold-open device (20).

4. Stacking storage arrangement according to claim 2 or 3, **characterized in that** the drive arrangement (21, 22) has a drive element (24) which is under a preload and a motor (21) which acts on the drive element (24) counter to the preload.

5. Stacking storage arrangement according to claim 4, **characterized in that** the motor (21) is designed as a rotary motor.

6. Stacking storage arrangement according to one of claims 1 to 5, **characterized in that** the hold-open device (20) is arranged outside an opening (8) which connects the container receiving space (2) to the loading space (3).

7. Stacking storage arrangement according to one of claims 1 to 6, **characterized in that** the fixing element (30) is pivotably mounted.

8. Stacking storage arrangement according to one of claims 1 to 7, **characterized in that** the fixing element (30) is pretensioned in the second position.

9. Method for operating a stacking storage arrangement (1) according to one of claims 1 to 8, wherein the holding elements (16) of the holding device are held in the release position using the hold-open device (20).

10. method according to claim 9, **characterized in that** the holding device is opened by lifting the container holder (14).

11. method according to claim 9 or 10, **characterized in that** several containers (9) are removed simultaneously from a container receiving space (2).

## Revendications

1. Système de stockage par empilement (1) avec plusieurs compartiments de réception de conteneurs (2), un compartiment de chargement (3) situé sous les compartiments de réception de conteneurs (2), et un véhicule de chargement (10) pouvant être déplacé dans le compartiment de chargement (3), qui comporte un châssis (11) et un logement de conteneur (14) pouvant être modifié en hauteur par rapport au châssis (11),
sachant qu'un système de retenue est respectivement disposé entre un compartiment de réception de conteneurs (2) et le compartiment de chargement (3),
sachant que le système de retenue comporte plusieurs éléments de retenue (16),
sachant que les éléments de retenue peuvent être mobiles entre une position de retenue et une position de libération,
sachant que des éléments de déverrouillage (15) d'un système de déverrouillage sont disposés sur le logement de conteneur (14),
sachant que les éléments de déverrouillage (15) peuvent être soulevés avec le logement de conteneur (14) pour déplacer les éléments de retenue (16) de la position de retenue à la position de libération,
sachant qu'un système de maintien ouvert (20) séparé du logement de conteneur (14) est disposé sur le châssis (11), sachant que le système de maintien ouvert (20) comporte un nombre d'éléments de maintien ouvert (26), qui correspond au moins au nombre des éléments de retenue (16),
sachant que le système de retenue comporte plusieurs éléments de fixation (30),
sachant qu'un élément de fixation (30) est attribué à chaque élément de retenue (16), qui peut être mobile entre une première position, dans laquelle il maintient l'élément de maintien (16) dans la position de libération, et une deuxième position, dans laquelle il n'agit pas sur l'élément de retenue (16),
sachant que l'élément de fixation (30) peut être actionné par le système de maintien ouvert (20).

2. Système de stockage par empilement selon la revendication 1, **caractérisé en ce que** le système de maintien ouvert (20) comporte un système d'entraînement (21, 22, 24) disposé sur le châssis (11).

3. Système de stockage par empilement selon la revendication 2, **caractérisé en ce qu'**un dispositif limiteur de force (28) est disposé entre le système d'entraînement (21) et un levier d'actionnement (26) du système de maintien ouvert (20).

4. Système de stockage par empilement selon la revendication 2 ou 3, **caractérisé en ce que** le système d'entraînement (21, 22) comporte un élément d'entraînement (24) situé sous une précontrainte et un moteur (21) qui agit sur l'élément d'entraînement (24) en opposition à la précontrainte.

5. Système de stockage par empilement selon la revendication 4, **caractérisé en ce que** le moteur (21) est constitué sous la forme d'un moteur rotatif.

6. Système de stockage par empilement selon l'une quelconque des revendications 1 à 5, **caractérisé en ce que** le système de maintien ouvert (20) est disposé en dehors d'une ouverture (8), qui relie le compartiment de réception de conteneurs (2) au compartiment de chargement (3).

7. Système de stockage par empilement selon l'une quelconque des revendications 1 à 6, **caractérisé en ce que** l'élément de fixation (30) est logé pouvant pivoter.

8. Système de stockage par empilement selon l'une quelconque des revendications 1 à 7, **caractérisé en ce que** l'élément de fixation (30) est précontraint dans la deuxième position.

9. Procédé de fonctionnement d'un système de stockage par empilement (1) selon l'une quelconque des revendications 1 à 8, sachant que l'on maintient les éléments de retenue (16) du système de retenue en utilisant le système de maintien ouvert (20) dans la position de libération.

10. Procédé selon la revendication 9, **caractérisé en ce que** l'on ouvre le système de retenue en soulevant le logement pour conteneur (14).

11. Procédé selon la revendication 9 ou 10, **caractérisé en ce que** l'on prélève plusieurs conteneurs (9) simultanément d'un compartiment de réception de conteneurs (2).
